# EUROPEAN PATENT APPLICATION

(11) **EP 1 107 498 A2**
(43) Date of publication of application: **13.06.2001**
(21) Application number: 00125906.8
(22) Date of filing: 27.11.2000
(51) Int. Cl.: H04L 1/00

(54) **Integrated reception apparatus**

(30) Priority: 10.12.1999 JP 35188799
(71) Applicant: TOYOTA JIDOSHA KABUSHIKI KAISHA, Aichi-ken 471-8571 (JP)
(72) Inventor: Morita, Makoto, Toyota Jidosha Kabushiki Kaisha, Toyota-shi, Aichi-ken 471-8571 (JP); Aono, Hiroyuki, Toyota Jidosha Kabushiki Kaisha, Toyota-shi, Aichi-ken 471-8571 (JP)
(74) Representative: Leson, Thomas Johannes Alois, Dipl.-Ing.

(57) **Abstract**

In an integrated reception apparatus, information received from a plurality of sources is supplied to an A/D (7) and a DSP (8); a controller (8a) of the DSP (8) determines an order of priority of the information, and processes the information based on the order of priority. The order of priority is determined based on an error correction ability, allowable error ratio, or degree of importance of the information and, by performing demodulation of the signals lower in priority with interruption or curtailment processing, the capacity of the DSP (8) is efficiently used.

## Description

### BACKGROUND OF THE INVENTION

### Field of the Invention

The present invention relates to an integrated reception apparatus, particularly to an apparatus for receiving and processing information supplied from a plurality of media.

### Description of the Related Art

With the progress of an information-oriented society, modes of transmitting/receiving information extend over a wind range, including optical communication, radio wave communication, satellite broadcasting, and the like. To deal with the multiple media available, it is preferable a single receiver can receive and process information from a plurality of media. For this purpose, there has been proposed a technique of selecting with a switch one source of information to be processed, and a technique of providing a receiver with an ability to simultaneously process a plurality of information from a plurality of sources.

However, when the information to be processed is limited to information from a single source, there arises a problem that two or more types of necessary information cannot be used. Moreover, in a configuration wherein simultaneous processing of multiple information is enabled by providing a separate reception processor for each medium,, the the receiver becomes expensive and unnecessarily complicated. Therefore, in order to solve this problem, it is necessary that a common processor for processing information from a plurality of sources be provided.

### SUMMARY OF THE INVENTION

The present invention has been developed in consideration of the aforementioned problem, and an object thereof is to provide a receiver which can receive and efficiently process a information from a plurality of sources.

According to the present invention, there is provided an integrated reception apparatus comprising a processor for receiving and processing in common information feeds from a plurality of information sources, and the processor processes the plurality of pieces of information based on an order of priority given to the information according to a predetermined standard. Rather than simply processing the plurality of information feeds with equal priority, by weighting information based on the order of priority and processing the information accordingly, information from a plurality of sources can be efficiently processed without adversely affecting reception quality.

Here, the specific weight of a task in a reception processing is predetermined, and may be setting according to error correction ability of the information sources. Preferably, the higher the error correction ability, the lower the order of priority. Moreover, the predetermined standard can be an allowable error ratio of the plurality of information sources, and preferably the higher the allowable error ratio, the lower the priority.

Furthermore, the predetermined standard may preferably be a degree of importance determined based on each of the plurality of information sources, and preferably the lower the degree of importance is, the lower the order of priority is. Additionally, the predetermined standard can be an error ratio of the plurality of information sources, and preferably the higher the error ratio, the higher the assigned priority.

Moreover, the predetermined standard can be a reception intensity of the plurality of information sources, and preferably the smaller the reception intensity, the higher the assigned priority.

Furthermore, the predetermined standard can be a multiplex degree of information in a case where a plurality of information sources are simultaneously received by code division multiple access (CDMA), and preferably the higher the multiplex degree, the higher the order of priority. During CDMA transmission, a PN code (pseudo noise code) is multiplied and spectrum diffusion is performed. On the reception side, a received signal is restored by multiplying it by the same PN code. However, the higher the multiplex degree, the larger is the number of signal paths and the more complicated is the delay profile. Demodulation can securely be performed by raising the order of priority.

After the order of priority is determined by the predetermined standard, the processor preferably performs a curtailment processing with respect to the low priority information. Therefore, more tasks can be allotted to high priority information.

Moreover, the processor preferably allots more demodulator capacity to higher priority information. The demodulator can be a finger in CDMA. In order to deal with the delay profile of the received signal, the finger in CDMA extracts an original signal from the received signal in synchronization with the PN code, and establishes synchronization by setting a delay amount of the PN code to various values. For a signal whose delay profile is complicated, it much more difficult to establish synchronization, but high-quality demodulation can be realized by allotting more reverse diffusers (fingers) to such information.

Moreover, when digitizing the plurality of information feeds, the processor preferably sets sampling, bit amount, or input level according to the order of priority. With respect to high priority information, for example, by allotting more sampling tasks to increase the number of samplings, the digitization can be performed with a higher precision.

### BRIEF DESCRIPTION OF THE DRAWINGS

Fig. 1 is a block diagram of a preferred embodiment of the present invention.

Fig. 2 is a processing flowchart of the receiver of Fig. 1.

Fig. 3 is a block diagram of another preferred embodiment of the present invention.

Fig. 4 is a block diagram of the searcher in Fig. 3.

Fig. 5 is an explanatory view of an output signal of the searcher of Fig. 4.

Fig. 6 is a block diagram of a finger in Fig. 3.

Fig. 7 is a block diagram of still another preferred embodiment of the present invention.

Fig. 8 is a processing flowchart of the receiver of Fig. 7.

Figs. 9A to 9D are timing charts of the receiver of Fig. 7.

### DETAILED DESCRIPTION OF THE PREFERRED EMBODIMENTS

Preferred embodiments of the present invention will be described hereinafter with reference to the drawings.

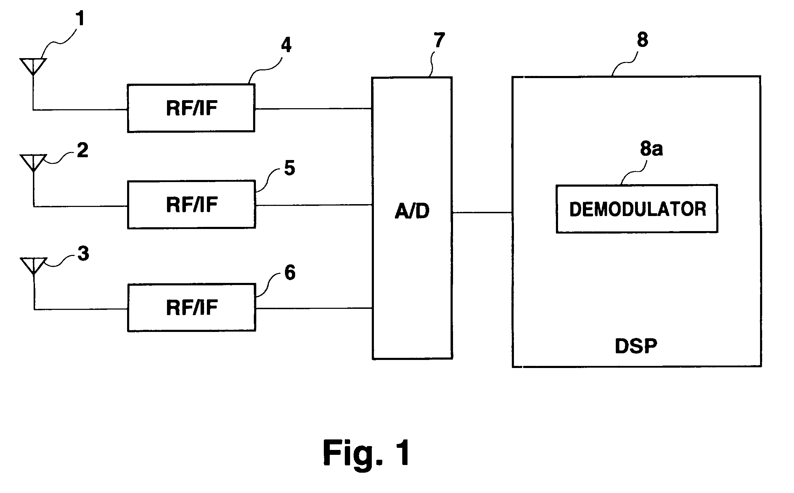

Fig. 1 shows a block diagram of an integrated receiver according to a first preferred embodiment of the present invention. Antennas 1, 2, 3 for receiving three information feeds are disposed. For example, the antenna 1 may be receive a transmitted signal from a beacon (light or radio wave) installed on a road, the antenna 2 may receive radio waves from satellite broadcasting, and the antenna 3 may be an antenna for a mobile telephone. More generally, the antenna 1 receives information from a medium (medium A) which requires continuous reception, the antenna 2 receives information from a medium (medium B) in which a reception processing may not be performed for a short time by interleave or error correcting function, and the antenna 3 may receive information from a medium (medium C) which has a resend control by a high-order protocol.

The respective antennas 1, 2, 3 are connected to down converters RF/IF 4, 5, 6, in which conversion to an IF band (middle frequency band or base band signal) is performed to create an output. The down converters RF/IF 4, 5, 6 are connected in common to an A/D converter 7 which digitizes a received signal from the converters and supplies the signal to a commonly connected digital signal processor (DSP) 8.

The DSP 8 is provided with a demodulator 8a to demodulate three types of input received signals and create an output. However, when simultaneous processing capability is exceeded, demodulation is performed based on an order of priority of each received signal. The order of priority is determined in accordance with a predetermined standard, and specifically determined based on an error correction ability and allowable error ratio of each received signal (or each medium), and a degree of importance of the information. These will be described hereinafter.

### Prioritizing by Error Correction Ability:

For a medium in which an interleave or an error correction code exists, the order of priority is lowered in a period in which normal demodulation is possible by the interleave or the error correcting function without performing any processing, and the order of priority is raised outside that period. Moreover, the priority of a medium in which a higher-order protocol for resend control is lowered. In the present example, the priority is set such that medium A > medium B > medium C.

### Prioritizing by Degree of Importance of Information:

The degree of importance is determined by a type of information transmitted through each medium. For example, when safety information or emergency information is transmitted from the medium A, the order of priority of the medium A is high, and when route information or congestion information is transmitted from the medium B, the order of priority of the medium B is set lower than that of the medium A carrying emergency information. Moreover, when facility information, event information, or other entertainment information is being transmitted through medium C, the order of priority of the medium C is set much lower than that of the medium B. When the emergency information is transmitted from the medium A at one time, and the entertainment information is transmitted at another time, the order of priority of medium A is temporarily set high during the transmission of emergency information, and lowered during transmission of entertainment information.

### Prioritizing by Allowable Error Ratio of Information:

The allowable error ratio can be viewed as a measure of the redundancy of the information in a transmission. This ratio measures the degree to which error generated in the information will effect the ability to use the transmitted information. For example, for information which each bit signifies a portion of an ID, numeral, text or the like, the order of priority is high. For image or voice information, even if a part of the information is lost, the usefulness of the information is little influenced and the order of priority is low.

After the information is prioritized in accordance with the error correction ability of the information or the like, the DSP 8 processes the information in accordance with the order of priority. For example, when the order of priority is set to medium A > medium B > medium C, the processing is interrupted with respect to the received signal of the medium C lowest in the order of priority, and a curtailment processing is performed with respect to the received signal of the medium B next lowest in the order of priority. Therefore, while processing is concentrated on the received signals with higher priority, other information can be simultaneously processed, and efficient processing can be performed.

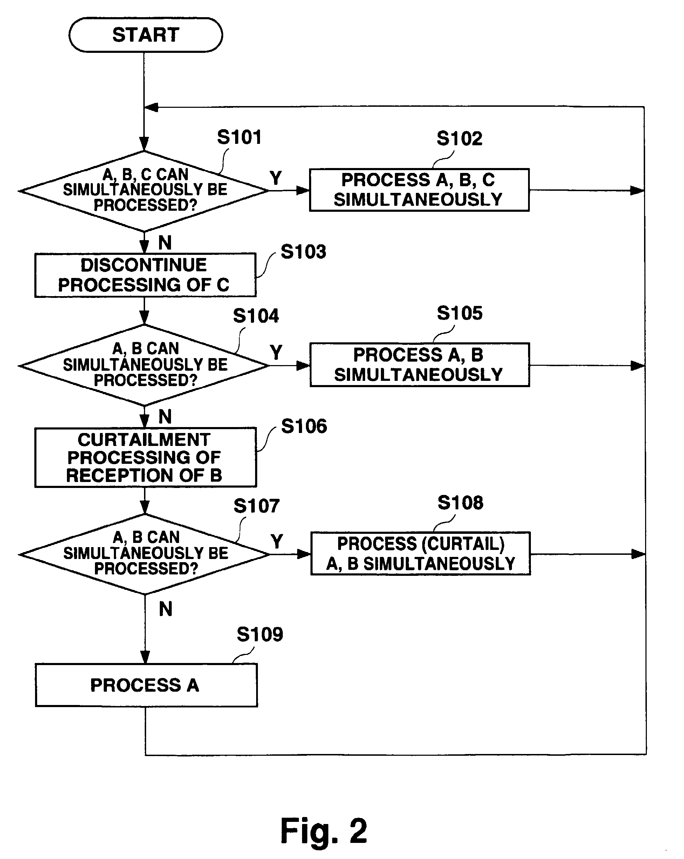

Fig. 2 shows a processing flowchart of the DSP 8 in the present example in which the order of priority is set based on error correction ability to medium A > medium B > medium C. First, the DSP 8 judges whether or not the received signals of the media A, B, C can be simultaneously processed (S101). When it is determined that all signals can be processed simultaneously, simultaneous processing is performed (S102). However, when it is determined that the signals cannot be simultaneously processed, the received signal processing of the medium C lowest in the order of priority is interrupted (S103). Therefore, the processing load in the DSP 8 is reduced.

Subsequently, it is judged whether or not the received signals of the media A and B can be simultaneously processed (S104). When it is determined that these signals can simultaneously be processed by the DSP 8, the processing is allowed (S105), but when simultaneous processing is determined to be impossible, the received signal of the medium B lower in priority is subjected to the curtailment processing (S106). Therefore, the processing load in the DSP 8 can be further reduced.

Subsequently, it is confirmed whether or not the received signal of the medium A and the received signal received from the medium B and subjected to the curtailment processing can be simultaneously processed (S107), and the signals are simultaneously processed when simultaneous processing is judged possible (S108). When it is determined that even after the curtailment processing simultaneous processing remains impossible, only the received signal of the medium A highest in the order of priority is processed (S109). By determining the order of priority and processing the information in this manner, information from a plurality of information sources can be dealt with in a device of simple hardware configuration.

Additionally, in the present embodiment, when the simultaneous processing of the media A and B is impossible, it is also preferable to further consider the order of priority based on the information types of the media A and B, and to process the received signal of the medium with higher priority.

Moreover, the order of priority may be preferably determined overall based on all of the error correction ability, degree of importance, and allowable error ratio, and in this case, the order of priority is also preferably determined by weighting each standard.

Furthermore, while in the above example the DSP 8 is constituted as a processor to perform a common processing, an RF/IF section or an A/D may also be used as a common processor to similarly perform the processing based on the order of priority.

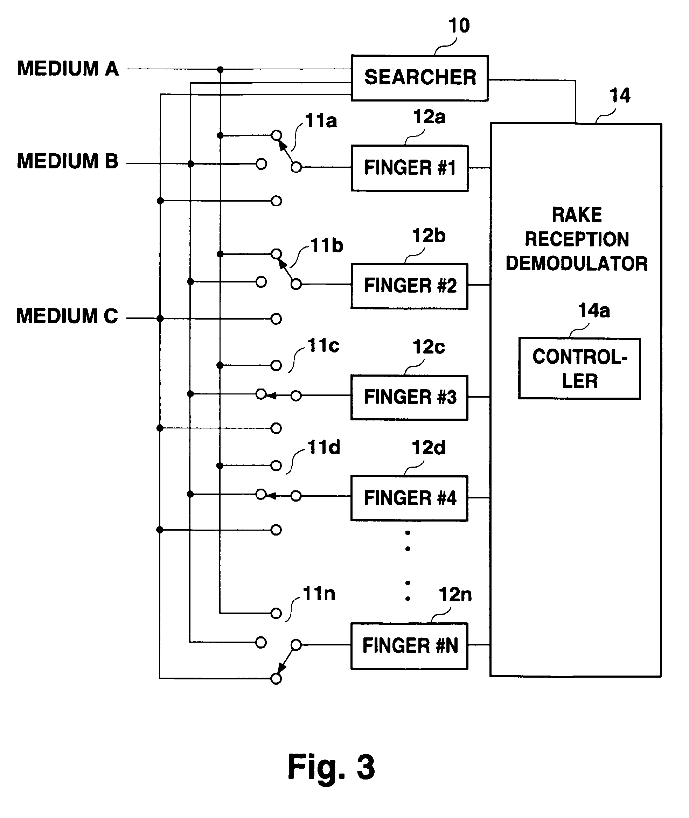

Fig. 3 shows a block diagram of the integrated receiver according to a second preferred embodiment of the present invention.

In the present embodiment, the receiver functions as a receiver for receiving code division multiple access (CDMA)signals for use in a cellular phone or the like. To simultaneously receive a plurality of codes (plurality of channels), or to simultaneously receive a plurality of media of CDMA, when the corresponding number of fingers for RAKE reception are prepared in order to secure a quality, the number of fingers vastly increases. To solve this problem, by using the RAKE reception finger as a common section, and dynamically allotting the fingers to respective CDMA media (or respective channels), the number of fingers is reduced, while the reception quality is maintained.

The integrated receiver of the present embodiment is provided with a searcher 10, fingers 12a to 12n common to a RAKE reception demodulator 14 and respective media (or channels), and switches lla to lln. Signals from three types of media A, B, C (e.g., medium A is a first channel of digital satellite broadcasting, medium B is a second channel, and medium C is a first channel of CDMA telephone) are supplied to the searcher 10, and to the switches lla to lln. The switch lla connects the finger 12a to one of the media A, B, C, and, for example, with switching to the medium A, the received signal of the medium A is supplied to the finger 12a. This also applies to the remaining switches 11b to lln. Therefore, by controlling the switches lla to lln, the number of fingers to which the received signals of the respective media are supplied can be controlled.

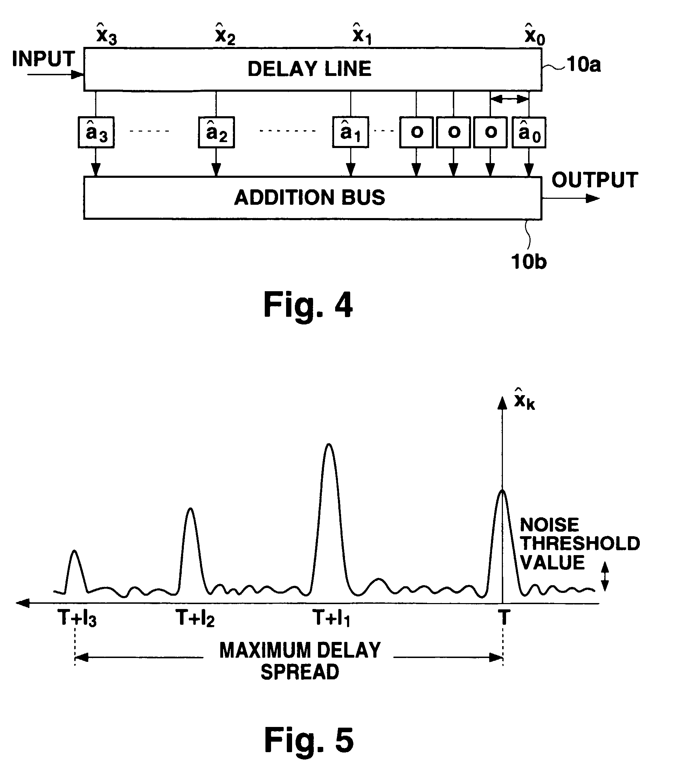

The searcher 10 obtains a delay profile of the received signal from each medium, as shown in the example depicted in Fig. 4, and an output example is shown in Fig. 5. Because the signal from the origin source passes through a plurality of paths to reach the receiver, a different delay time is produced in accordance with each path distance. In the searcher 10, after an input signal is delayed by a delay line 10a, and a diffusion code of the signal to be demodulated is multiplied, addition is performed in an addition bus 10b to output a correlation value. Additionally, Fig. 5 shows the output example in which a direct wave and radio waves delayed by t1, t2, t3 are received.

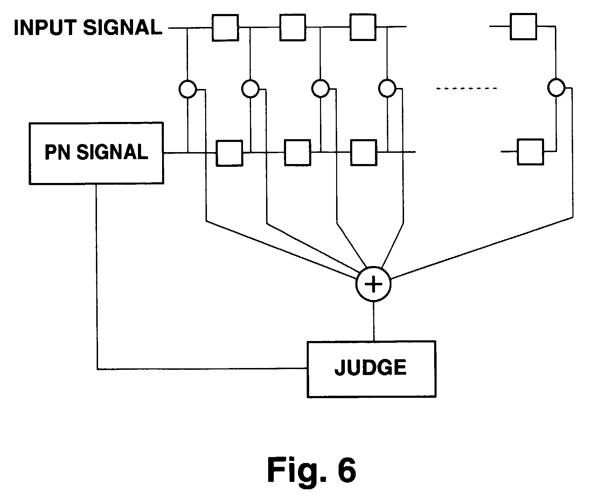

Moreover, the fingers 12a to 12n multiply a PN code identical to the PN code used on a transmission side in synchronization with an input signal to restore (back-diffuse) an original signal, and a constitution example is shown in Fig. 6. With respect to the input signals, various PN codes identical to those on the transmission side are delayed, multiplied, and added to restore the signal. Since one finger can establish one synchronous timing, with reception of a plurality of multiplex waves, higher-quality demodulation can be realized by using a plurality of fingers.

The delay profile (see Fig. 5) calculated in the searcher 10 is supplied to the RAKE reception demodulator 14. The RAKE reception demodulator 14 is provided with a controller 14a, and the controller 14a controls a PN signal timing for back diffusion of the fingers 12a to 12n based on the delay profile of the respective media, and controls the switches lla to lln based on the order of priority of the media, so that the number of fingers to be allotted to each of the respective media is dynamically changed. Specifically, the controller 14a calculates the number of multiplex waves (multiplex degree) from the delay profile (the number of multiplex waves = multiplex degree = 4 in Fig. 5). As the number of multiplex waves increases, the order of priority of the medium is raised and a greater number of fingers is allotted. For example, assuming that the total number of fingers of the receiver is 10, the multiplex degree of the medium A is 5, the multiplex degree of the medium B is 3, and the multiplex degree of the medium C is 2, the controller 14a allots five fingers to the medium A, three fingers to the medium B, and two fingers to the medium C. Alternatively, the controller 14a calculates a signal interference ratio (SIR) of each medium from the delay profile and, with a smaller SIR, raises the order of priority and allots more fingers. Therefore, in each medium the synchronization is securely established, and perceived reception quality can be enhanced.

In this manner, in the present embodiment, by using the fingers in common and allotting the fingers to the respective media based on the order of priority, the allotment of fingers is dynamically changed, and a plurality of CDMA information sources can be received without complicating the hardware configuration.

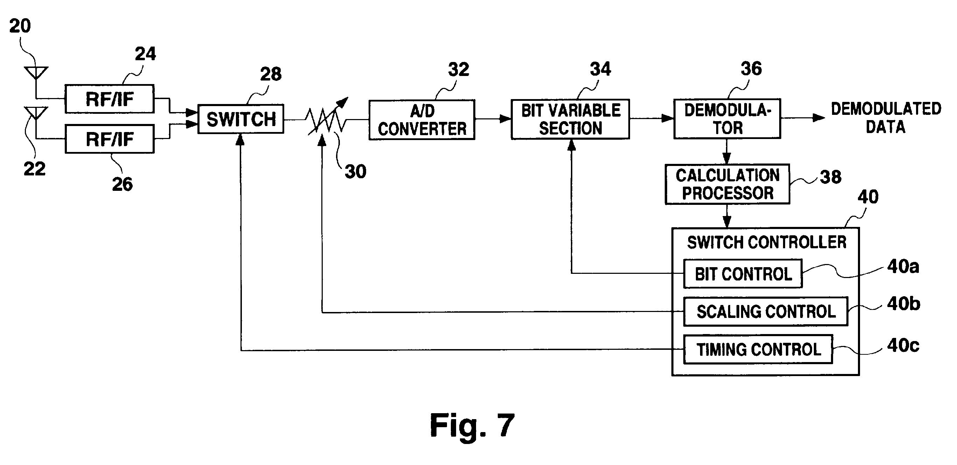

Fig. 7 shows a block diagram of the integrated receiver in still another preferred embodiment of the present invention. The signals of the media A and B received by antennas 20, 22 are down-converted to IF or base band signals by RF/IF 24, 26, and supplied to a switch 28. The switch 28 alternately switches the received signals of the media A and B and outputs the signal to an A/D converter 32. A variable attenuator 30 is disposed before the A/D 32, so that an input level during digitization in the A/D 32 is changed (scaling control). An output of the A/D 32 is supplied to a bit variable section 34, and adjusted to provide an optimum bit number (bit control). The digital signal with the bit number adjusted in the bit variable section 34 is demodulated by a demodulator 36, and supplied to a calculation processor 38. The calculation processor 38 comprises a DSP or the like, and calculates a reception intensity, bit error ratio, and SIR of the media A and B. Furthermore, the calculation processor 38 calculates an evaluation value indicating a degree of reception quality of the media A and B based on these values, and determines the order of priority. Naturally, the calculation processor 38 can also determine the order of priority based on reception power, bit error ratio, or SIR. Subsequently, after determining the relative priority of the media A and B, a control signal is supplied to a switch controller 40. Based on the control signal from the calculation processor 38, the switch controller 40 adjusts switch timing in the switch 28, scaling in the variable attenuator 30, and bit amount in the bit variable section 34.

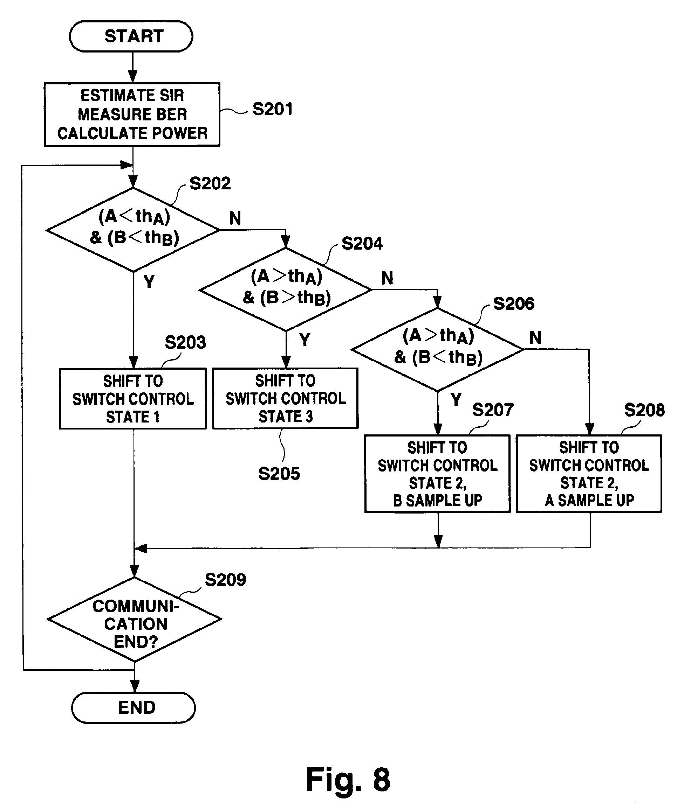

Fig. 8 shows a processing flowchart of the calculation processor 38 and switch controller 40. First, the calculation processor 38 calculates the SIR, bit error ratio (BER), and reception power of both of the media A and B (S201). Subsequently, these are synthesized and the evaluation value indicating the reception quality is calculated. The evaluation value may be obtained by weighting and adding three calculated values. It is then assumed that the evaluation value of the medium A is A, and the evaluation value of the medium B is B.

Subsequently, the calculation processor 38 compares the evaluation value A of the medium A with a predetermined threshold value thA, and compares the evaluation value B of the medium B with a predetermined threshold value thB (S202). The threshold values thA, thB are preferably values reflecting the media. Subsequently, as a comparison result, when A < thA and B < thB, it is judged that the quality of both of the media A and B are as low as usual, or lower than usual, and that there is no difference in the order of priority. The control signal is then output to the switch controller 40 to perform digitization in a state 1, described below. The switch controller 40 changes the switch timing in the switch 28 to the state 1 based on the control signal (S203). Additionally, by changing the switch timing of the switch 28, the number of samplings (or sampling period) of the respective media in the A/D 32 can be changed. On the other hand, as the comparison result, when A > thA and B > thB (S204), it is judged that the reception quality of both media A and media B is more satisfactory than usual and that there is no difference in the order of priority. The control signal is then output to the switch controller 40 to perform digitization in a state 3, described below. The switch controller 40 changes the switch timing in the switch 28 to the state 3 based on the control signal (S205). Moreover, when, as the comparison result, A > thA and B < thB, it is judged that the reception quality of the medium A is satisfactory, but the reception quality of the medium B is deteriorated and that the medium B is high in the order of priority, the state is shifted to a state 2 with respect to the switch controller 40 and the number of samplings of the medium B is increased (S206, S207). Furthermore, when, as the comparison result, A < thA and B > thB, it is judged that the reception quality of the medium A is deteriorated but the reception quality of the medium B is satisfactory and that the order of priority of the medium A is high, the state is shifted to the state 2 with respect to the switch controller 40 and the number of samplings of the medium A is increased (S206, S208). By repeating the aforementioned processing until communication is ended (S209), the digitization of each medium is dynamically set in according to reception quality.

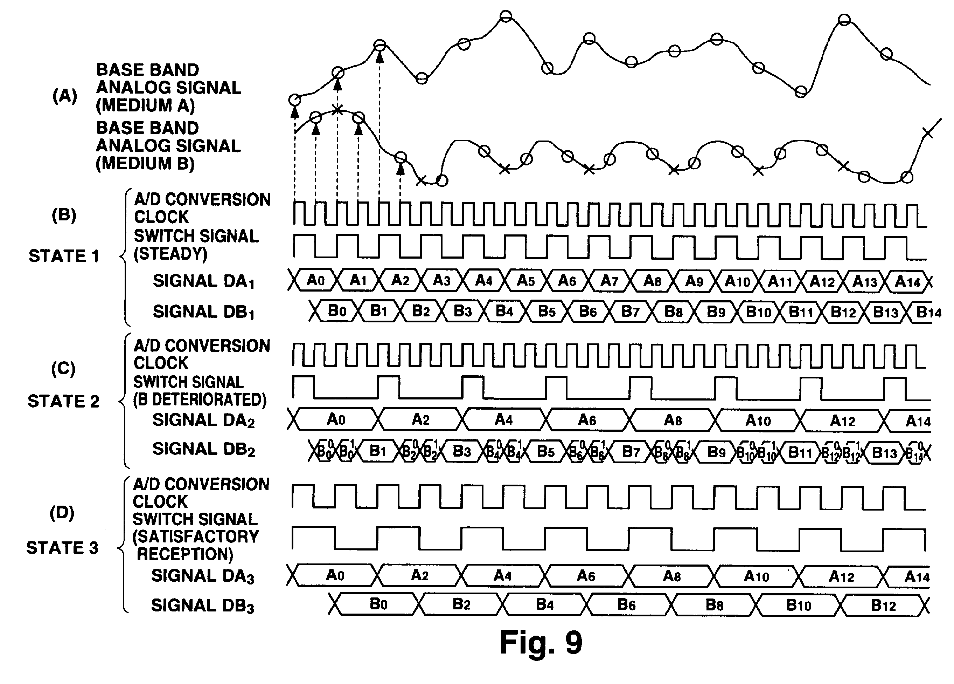

Fig. 9 shows timing charts in the states 1, 2 (however, when the order of priority of the medium B is high) and 3. Fig. 9A shows a timing chart of received analog signals (base band) of the media A and B; Fig. 9B the timing chart of a sampling clock of the A/D 32, switch signal of the switch 28 and digitized signals of the media A and B in the state 1; Fig. 9C shows a timing chart of the sampling clock of the A/D 32, switch signal of the switch 28 and digitized signals of the media A and B in the state 2; and Fig. 9D shows a timing chart of the sampling clock of the A/D 32, switch signal of the switch 28 and digitized signals of the media A and B in the state 3.

In the state 1, the switch signal has a duty ratio of 50%, and the media A and B are equally and alternately sampled. This state is usual digitization, and the signals of the media A, B are alternately digitized A0, B0, A1, B1, A2, B2, ...

In the state 3, the switch signal similarly has a duty ratio of 50%, period increases, and each medium sampling number decreases. Additionally, in the state 3 the period of the sampling clock of the A/D 32 also increases. Because the reception quality is satisfactory, decreasing the sampling number in this manner, will allow the digitization and later-step digital signal processing tasks to be reduced. In the state 3, the signals of the media A, B are alternately digitized A0, B0, A2, B2, A4, B4,..., but each medium sampling number is smaller than that in the state 1.

In the state 2, because the reception quality of the medium B is poor and the order of priority of the medium B is high, the received signal of the medium B is preferentially sampled. Specifically, by changing the switch signal duty ratio the signal of the medium B is preferentially inputted to the A/D 32 and sampled. In Fig. 9, for the medium A, the sampling period increases and only A0, A2, A4... are sampled. Meanwhile, the sampling period of the medium B decreases and more samplings are performed such as B0(0), B0(1), B2(0), B2(1), ... Specifically, the signals of the media A, B are alternately digitized such as A0, B0(0), B0(1), A2, B2(0), B2(1), A4, B4(0), B4(2)... Here, B0(0), B0(1) indicates that the B0-th signal is sampled twice (0 and 1). In the state 2, when the reception quality of the medium A is poor and the order of priority of the medium A is high, medium A is preferentially sampled.

By preferentially sampling and digitizing the medium higher in priority, the common A/D 32 is efficiently used so that the reception quality of the plurality of media can be maintained.

Additionally, while in the above examples, the sampling is changed by controlling the switch timing of the switch 28 based on the order of priority, the scaling and bit amount can also be controlled based on the order of priority. For example, when the reception quality of the medium A is poor and the order of priority of the medium A is high, the input level of the signal of the medium A to the A/D 32 is lowered, the input level of the signal of the medium B may be increased, and the bit number of the medium A may be reduced.

In the present embodiment, by setting the A/D 32 to be common to the plurality of media and controlling the digitization of each medium based on the order of priority, an efficient processing is possible.

The respective embodiments of the present invention have been described above, but the present invention is not limited to these embodiments, and various modifications are possible within a scope of technical idea of the present invention. For example, in the constitution of Fig. 7, it is also preferable to determine the order of priority in accordance with the presence or absence of the error correction ability and control the timing of the switch 28 and input level to A/D 32, or to determine the order of priority based on the information type and control the timing of the switch 28 and input level to A/D 32.

In an integrated reception apparatus, information received from a plurality of sources is supplied to an A/D (7) and a DSP (8); a controller (8a) of the DSP (8) determines an order of priority of the information, and processes the information based on the order of priority. The order of priority is determined based on an error correction ability, allowable error ratio, or degree of importance of the information and, by performing demodulation of the signals lower in priority with interruption or curtailment processing, the capacity of the DSP (8) is efficiently used.

## Claims

1. An integrated reception apparatus comprising a processor for receiving and processing in common information from a plurality of information sources,
said processor processing said information based on an order of priority given to the information according to a predetermined standard.

2. The apparatus according to claim 1, wherein said predetermined standard is an error correction ability of said plurality of information sources, and the priority is set to be inversely proportional to said error correction ability.

3. The apparatus according to claim 1, wherein said predetermined standard is an allowable error ratio of said plurality of information sources, and the priority is set to be inversely proportional to said allowable error ratio.

4. The apparatus according to claim 1, wherein said predetermined standard is a degree of importance determined based on types of said plurality of information sources, and the priority is set to be proportional to said degree of importance.

5. The apparatus according to claim 1, wherein said predetermined standard is an error ratio of said plurality of information sources, and the priority is set to be proportional to said error ratio.

6. The apparatus according to claim 1, wherein said predetermined standard is a reception intensity of said plurality of information sources, and the priority is set to be inversely proportional to said reception intensity.

7. The apparatus according to claim 1, wherein said plurality of information sources are received by CDMA, said predetermined standard is a multiplex degree of each information source, and the priority is set to be proportional to the multiplex degree.

8. The apparatus according to any one of claims 1 to 4, wherein said processor performs a curtailment processing with respect to the information low in said order of priority.

9. The apparatus according to any one of claims 1 to 7, wherein said processor comprises a demodulator for performing a demodulation processing with respect to the received plurality of information sources, and a greater percentage of demodulator capacity is allocated to processing information ranked higher in said order of priority.

10. The apparatus according to claim 9, wherein said demodulator is a back diffuser in CDMA.

11. The apparatus according to any one of claims 1 to 7, wherein said processor sets sampling in digitization of said plurality of information sources based on said order of priority.

12. The apparatus according to any one of claims 1 to 7, wherein said processor sets a bit amount in digitization of said plurality of information sources based on said order of priority.

13. The apparatus according to any one of claims 1 to 7, wherein said processor sets an input level in digitization of said plurality of information sources based on said order of priority.
